(19) Europäisches Patentamt
European Patent Office
Office européen des brevets

(11) Veröffentlichungsnummer: **0 037 894**
**B1**

# (12) EUROPÄISCHE PATENTSCHRIFT

(45) Veröffentlichungstag der Patentschrift: **16.01.85**

(51) Int. Cl.⁴: **C 08 F 251/00**, C 08 F 289/00, C 08 F 4/64

(21) Anmeldenummer: **81101381.2**

(22) Anmeldetag: **25.02.81**

(54) **Verfahren zur Herstellung von Stärke/Polyolefin-Polymermassen.**

(30) Priorität: **28.02.80 DE 3007433**

(43) Veröffentlichungstag der Anmeldung: **21.10.81 Patentblatt 81/42**

(45) Bekanntmachung des Hinweises auf die Patenterteilung: **16.01.85 Patentblatt 85/3**

(84) Benannte Vertragsstaaten: **BE DE FR GB IT NL SE**

(56) Entgegenhaltungen:
**DE - A - 2 608 863**
**DE - A - 2 608 933**
**US - A - 3 704 271**

(73) Patentinhaber: **CPC INTERNATIONAL INC., International Plaza P.O. Box 8000, Englewood Cliffs New Jersey 07632 (US)**

(72) Erfinder: **Kaminsky, Walter, Dr., D-2080 Pinneberg Waldenau (DE)**

(74) Vertreter: **Patentanwälte Müller-Boré, Deufel, Schön, Hertel, Lewald, Otto, Postfach 26 02 47 Isartorplatz 6, D-8000 München 26 (DE)**

**EP 0 037 894 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polymermassen aus Polyolefinen und Stärke und/oder Lignin sowie gegebenenfalls Zellulosefasern durch Polymerisation mindestens eines Olefins, vorzugsweise eines niedermolekularen aliphatischen Monoolefins in einem inerten, flüssigen und/oder gasförmigen Reaktionsmedium, bei einer Temperatur von −50 bis 145 °C in Gegenwart eines durch Behandeln von

A) weitgehend getrockneter Stärke und/oder Lignin oder eines Gemisches von solcher Stärke und/oder solchem Lignin mit bis 99 Gew.% an Zellulosefaseranteil mit

B) einer Titan-, Zirkon-, Chrom- oder Vanadiumverbindung, und

C) einem Aluminiumtrialkyl hergestellten Ziegler-Natta-Katalysatorsystems.

Der Begriff «niedermolekulares Monoolefin», «Alkyl» oder «niederer Kohlenwasserstoffrest» bedeutet vorzugsweise Reste bis $C_6$ und insbesondere bis $C_4$.

Verfahren dieses Typs sind bekannt (US-PS 3 704 271) und bezwecken in erster Linie die Herstellung von Polymermassen mit speziellen vorteilhaften anwendungstechnischen Eigenschaften, wie sie bei der Herstellung entsprechender Gemische durch physikalische Methoden erfahrungsgemäss nicht erzielt werden können, sowie von durch mindestens teilweise Abtrennung der Stärke daraus gewinnbaren Polyolefinen mit erwünschten speziellen morphologischen Eigenschaften, die in der englisch-sprachigen Fachliteratur als «nascent polyolefins» bezeichnet werden.

Obwohl die bekannten Verfahren diese Aufgabe im Prinzip lösen, haben sie keine praktische Bedeutung erlangt. Hierfür dürften in erster Linie folgende Gründe massgeblich gewesen sein:

Nach dem Stand der Technik werden praktisch ausschliesslich Ziegler-Natta-Katalysatoren mit Übergangsmetallhalogeniden, insbesondere Vanadin- und Titanchloriden, als Übergangsmetallverbindung empfohlen, die bekanntlich stark korrodierend sind und daher kostspielige korrosionsbeständige Anlagen erfordern.

Noch störender ist, dass die nach dem Stand der Technik auf Stärke aufgebrachten Katalysatoren eine vielfach geringere Aktivität und Produktivität als entsprechende in der mittlerweile klassischen Olefinpolymerisation eingesetzte Ziegler-Natta-Katalysatorsysteme aufweisen, so dass für industrielle Verfahren extrem hohe Katalysatormengen eingesetzt werden müssten, wodurch nicht nur die Katalysatorkosten untragbar hoch würden, sondern auch der Gehalt der rohen Verfahrensprodukte an Übergangsmetall(en) so hoch würde, dass die Polymermassen zumindest für eine ganze Reihe von Anwendungszwecken nicht oder nur nach einer aufwendigen und kostspieligen Abtrennung von Übergangsmetall(en) eingesetzt werden könnten.

Der Erfindung lag daher die Aufgabe zugrunde, die bekannten Verfahren der eingangs bezeichneten Art so zu verbessern, dass die Nachteile des Standes der Technik vermieden oder zumindest gemildert werden und insbesondere ein Verfahren zur Verfügung zu stellen, das in gewöhnlichen, nicht besonders korrosionsbeständigen, Anlagen durchgeführt werden und mit vergleichsweise geringen Katalysatormengen auskommen kann.

Diese Aufgabe wird erfindungsgemäss, ausgehend von der überraschenden Erkenntnis, dass bestimmte, teilweise als sogenannte «homogene» Ziegler-Natta-Katalysatoren an sich bekannte Ziegler-Natta-Katalysatorsysteme (DE-PS 2 608 863), auch wenn sie auf Stärke aufgebracht werden, eine wesentlich höhere Aktivität und Produktivität als die aus dem Stand der Technik bekannten Katalysatoren dieses Typs besitzen, vorausgesetzt, dass man bei der Katalysatorherstellung zunächst das Aluminiumtrialkyl und erst danach die Übergangsmetallverbindung auf die Stärke einwirken lässt, gelöst, indem die Polymerisation in Gegenwart eines halogenfreien Katalysatorsystems durchgeführt wird, welches dadurch hergestellt worden ist, dass die Komponente A)

1) zunächst mit dem Aluminiumtrialkyl C) und
2) danach mit einer Übergangsmetallverbindung B) der allgemeinen Formel

$$(\text{Cyclopentadienyl})_n MR_m \qquad (I)$$

in der

M für Ti, Zr, Cr oder V und

R für einen niederen Kohlenwasserstoffrest oder Acetylacetonat steht und

n und m gleich oder verschieden sind und jeweils eine ganze Zahl von 0 bis 4 bedeuten, wobei die Gesamtsumme von n + m so gewählt wird um M abzusättigen,

behandelt wurde, unter Einhaltung eines Molverhältnisses von C zu B von 2 bis 1000 und einem Mengenverhältnis von C zu A in mmol/g von höchstens 5,

und das erhaltene Polymerisationsprodukt, gegebenenfalls nach Abtrennung von flüssigem Reaktionsmedium und/oder auswaschbarer Bestandteile bei erhöhter Temperatur unter Einwirkung von Knet- und/oder Scherkräften homogenisiert und gegebenenfalls ausgeformt wird.

Dies ist insbesondere deswegen überraschend, als nach der US-PS 3 704 271 der Reihenfolge, in der die Katalysatorkomponenten eingesetzt werden, keine Bedeutung zugemessen und in sämtlichen Beispielen sogar die umgekehrte Reihenfolge eingehalten und somit offensichtlich bevorzugt wird, und die erfindungsgemäss verwendeten, teilweise an sich bekannten, Übergangsmetallverbindungen der Formel I bislang nur in homogenen Ziegler-Natta-Katalysatorsystemen eingesetzt wurden und sich nur in ganz speziellen, qualitativ und quantitativ genau abgestimmten Systemen als ausreichend aktiv erwiesen haben, so dass ihre überlegene Aktivität und Produktivität in den erfindungsgemäss benutzten heterogenen Systemen nicht vorhersehbar war.

Es wurde weiter festgestellt, dass beim Verfahren der Erfindung überraschenderweise ungewöhnlich hohe Molverhältnisse von Aluminiumtrialkyl zu Übergangsmetallverbindung ohne nennenswerten Verlust an Katalysatoraktivität angewandt werden können, wodurch vorteilhafterweise der Einsatz an teurer und im Endprodukt aus einer Reihe von Gründen meist unerwünschter Übergangsmetallverbindung weiter verringert werden kann.

Nach der Erfindung wird daher das Katalysatorsystem mit einem Molverhältnis von Aluminiumtrialkyl zu Übergangsmetallverbindung von 2 bis 1000, vorzugsweise 5 bis 200, und insbesondere 10 bis 100 verwendet. Die hohe Aktivität und Produktivität der erfindungsgemäss verwendeten Katalysatorsysteme ermöglicht es zudem auch mit vergleichsweise geringen Mengen an Aluminiumtrialkyl auszukommen, wobei überraschenderweise selbst relativ hohe Restwassermengen in der Stärke nicht stören.

Beim Verfahren der Erfindung wird daher das Katalysatorsystem mit einem Mengenverhältnis von Aluminiumtrialkyl zu Stärke in mmol/g von höchstens 5, vorzugsweise höchstens 3 und insbesondere weniger als 2 verwendet.

Als Übergangsmetallverbindungen der Formel I haben sich für die Zwecke der Erfindung besonders bestimmte Bis(cyclopentadienyl)-titan- und -zirkon-alkyle bewährt. Vorzugsweise werden daher für das Verfahren der Erfindung unter Verwendung einer Übergangsmetallverbindung der allgemeinen Formel

$$(Cyclopentadienyl)_2M(CH_3)_2 \qquad II,$$

in der M Ti oder Zr bedeutet, hergestellte Katalysatoren eingesetzt. Im Falle der Verwendung von Chrom- oder Vanadiumverbindungen als Übergangsmetallverbindungen haben sich die Acetonylacetonate besonders bewährt.

Als α-Monoolefine verwendet man für die Zwekke der Erfindung vorzugsweise $C_2$–$C_6$α-Monoolefine, insbesondere Äthylen und/oder Propen.

Als Stärke kommen für die Zwecke der Erfindung zwar grundsätzlich alle Stärkearten sowie chemisch und/oder physikalisch modifizierte Stärken und Stärkeabbauprodukte bis hin zu Stärkeverzuckerungsprodukten in Betracht, jedoch sind in der Regel körnige Getreide-, insbesondere Mais-, und/oder Wurzel- bzw. Knollenstärken, insbesondere Kartoffelstärke, und/oder modifizierte, insbesondere abgebaute Stärken, bevorzugt. Die Begriffe modifizierte Stärke und Stärkeabbauprodukte umfassen z.B. vorgequollene Stärken (Quellstärken), säuremodifizierte Stärken, oxidierte Stärken, gering vernetzte Stärken, Stärkeäther und Stärkeester, Dialdehydstärken und als Abbauprodukte der Stärke Hydrolyseprodukte und Dextrine (siehe Ullmanns Enzyklopädie der technischen Chemie, 3. Auflage, Band 16, Seite 342 bis 352).

Nach einer fallweise bevorzugten Variante kombiniert man beim Verfahren der Erfindung die Stärke mit einem faserigen Kohlenhydratmaterial, insbesondere Zellulose, das den Stärke/Polyolefin-Polymermassen besondere Eigenschaften, insbesondere eine erhöhte Festigkeit, verleiht.

Eine bevorzugte Ausführungsform der Erfindung ist somit dadurch gekennzeichnet, dass man als bzw. statt Stärke ein Gemisch aus Stärke und bis zu 99, vorzugsweise etwa 5 bis 80, Gew.% Zellulosefasern verwendet.

Wie schon eingangs erwähnt, kann die Stärke erfindungsgemäss auch teilweise oder vollständig durch Lignin ersetzt werden. Gegenstand der Erfindung ist somit auch ein Verfahren, bei dem im Gemisch mit oder statt Stärke Lignin, gegebenenfalls ebenfalls in Mischung mit Kohlehydratfasern, verwendet wird. Als solches Gemisch ist z.B. auch Sägemehl zu betrachten.

Die Menge an Stärke und/oder Lignin sowie gegebenenfalls vorhandenen Kohlehydratfasern richtet sich nach dem Verwendungszweck der Massen. Will man Polyolefinmassen herstellen, die durch den Gehalt an Kohlehydratmaterial z.B. porös gemacht werden sollen, wird die Menge an Kohlehydratmaterial nur gering sein, z.B. bis zu 40 Gew.%. Will man dagegen z.B. nassfeste Papiere machen, also etwas Polyolefin auf im wesentlichen aus Kohlehydratfasern bestehende Unterlage aufpolymerisieren, kann die Menge an Kohlehydratmaterial z.B. 95% betragen. Aus praktischen Erwägungen wird man eine Menge von 10% Kohlehydratmaterial in den Stärke/Polyolefin-Polymermassen selten unterschreiten.

Die nach dem erfindungsgemässen Verfahren erhältlichen Stärke/Polyolefin-Polymermassen fallen üblicherweise in Form rieselfähiger Massen aus mit Polyolefin überzogenen Stärketeilchen an, die sich durch mechanische Bearbeitung, wie walzen, pressen oder extrudieren, vorzugsweise bei erhöhter Temperatur, insbesondere bei 30 bis 145 °C, zu Verbundwerkstoffen mit Eigenschaften homogenisieren und ausformen lassen, die bei rein physikalischen Mischungen aus Stärke(n) und Polyolefinen zumindest bislang nicht erreicht werden konnten. Trotz der beim Verfahren der Erfindung durch die Polymerisation in situ erzielten innigen Verbindung zwischen Stärke und Polyolefin kann die Stärke aus erfindungsgemäss hergestellten Stärke/Polyolefin-Polymermassen gewünschtenfalls zur Herstellung von Polyolefinwerkstoffen mit vorteilhaften anwendungstechnischen Eigenschaften, z.B. einer besonderen Porosität, auch ganz oder teilweise wieder mechanisch und/oder durch Herauslösen nach an sich bekannten Methoden abgetrennt werden, und zwar nicht nur aus Stärke/Polyolefin-Polymermassen, wie sie unmittelbar bei der Polymerisation anfallen, sondern fallweise auch aus in der vorstehend angegebenen Weise homogenisierten und/oder, beispielsweise zu Folien oder Fasern, ausgeformten Produkten. Ein entscheidender Vorteil des Verfahrens der Erfindung ist also darin zu sehen, dass es eine wirtschaftliche Möglichkeit eröffnet, neue, mit natürlich vorkommenden und nachwachsenden Polymeren, wie Zellulose, gestreckte Werkstoffe auf Polyolefinbasis herzustellen, die – jedenfalls in bezug auf bestimmte Anwendungszwecke – herkömmlichen Polyolefinen gleichwertige oder sogar überlegene Eigenschaften besitzen.

Die Beispiele erläutern die Erfindung.

Beispiel 1

19,6 g durch Azeotropdestillation mit Toluol als Schleppmittel getrocknete Stärke werden in 250 ml Toluol bei 40 °C mit 200 mmol Aluminium trimethyl versetzt. Nach 40 Minuten gibt man 0,05 mmol Bis(cyclopentadienyl)-Titan-dimethyl zu und presst dann Äthylen mit 9 bar auf. Nach einer Polymerisationszeit von einer Stunde erhält man 49,6 g Stärke/Polyolefin-Polymermassen aus 19,6 g Stärke und 30 g Polyäthylen. Die Produktivität beträgt somit etwa 14 300 g Polyäthylen/g Titan.

Zum Vergleich wurde Beispiel 1 der US-PS 3 704 271 mehrfach wiederholt, wobei eine Produktivität von nur etwa 30 bis 60 g Polyäthylen/g Titan erzielt wurde.

Beispiel 2

21,2 g analog Beispiel 1 getrocknete Stärke werden in 250 ml Toluol bei 40 °C mit 200 mmol Aluminiumtrimethyl versetzt. Nach 60 Minuten werden 0,05 mmol Bis(cyclopentadienyl)-titandimethyl zugesetzt, wonach Äthylen aufgepresst wird. Dabei erhält man 44 g Stärke/Polyolefin-Polymermassen aus 21,2 g Stärke und 22,8 g Polyäthylen.

Beispiel 3

Beispiel 1 wird wiederholt, wobei jedoch abweichend davon als Übergangsmetallverbindung Tetracyclopentadienylzirkon verwendet und eine Polymerisationszeit von 20 Stunden angewandt wird. Man erhält 34,9 g Stärke/Polyolefin-Polymermassen aus 19,6 g Stärke und 9,8 g Polyäthylen.

Beispiel 4

Beispiel 1 wurde wiederholt, wobei jedoch abweichend davon als Verbindung der Formel I 0,05 mmol Vanadiumacetylacetonat eingesetzt werden und eine Polymerisationszeit von 21 Stunden angewandt wird. Man erhält 24,8 g Stärke/Polyolefin-Polymermassen aus 19,5 g Stärke und 5,3 g Polyäthylen.

Beispiel 5

10 g analog Beispiel 1 getrocknete Stärke wurden in 200 ml Toluol bei 40 °C mit 5,2 mmol Aluminiumtrimethyl versetzt. Nach 120 min wurden 0,04 mmol Zirkonverbindung (Dicyclopentadienylzirkon-dimethyl) und 100 ml Propen zugesetzt und danach 9 bar Äthylen aufgepresst. Es wurden nach 5 Stunden 21,5 g Polymermasse aus Stärke und einem Äthylen/Propen-Copolymerisat erhalten.

Beispiel 6

10 g getrocknetes Lignin wurden in 200 ml Heptan wie in Beispiel 1 mit dem Katalysator von Beispiel 1 behandelt. Danach wurde wie in Beispiel 1 beschrieben weitergearbeitet. Nach 10 Stunden Polymerisationszeit erhielt man 22,4 g Ligninpolyäthylen-Polymermasse.

**Patentansprüche**

1. Verfahren zur Herstellung von Polymermassen aus Polyolefinen und Stärke und/oder Lignin sowie gegebenenfalls Zellulosefasern, durch Polymerisation mindestens eines Olefins, vorzugsweise eines niedermolekularen aliphatischen Monoolefins in einem inerten, flüssigen und/oder gasförmigen Reaktionsmedium, bei einer Temperatur von −50 bis 145 °C in Gegenwart eines durch Behandeln von

A) weitgehend getrockneter Stärke und/oder Lignin oder eines Gemisches von solcher Stärke und/oder solchem Lignin mit bis 99 Gew.% an Zellulosefaseranteil mit

B) einer Titan-, Zirkon-, Chrom- oder Vanadiumverbindung, und

C) einem Aluminiumtrialkyl hergestellten Ziegler-Natta-Katalysatorsystems, dadurch gekennzeichnet, dass die Polymerisation in Gegenwart eines halogenfreien Katalysatorsystems durchgeführt wird, welches dadurch hergestellt worden ist, dass die Komponente A)

1) zunächst mit dem Aluminiumtrialkyl C) und
2) danach mit einer Übergangsmetallverbindung B) der allgemeinen Formel

$$(Cyclopentadienyl)_nMR_m \qquad (I),$$

in der

M für Ti, Zr, Cr oder V und

R für einen niederen Kohlenwasserstoffrest oder Acetylacetonat steht und

n und m gleich oder verschieden sind und jeweils eine ganze Zahl von 0 bis 4 bedeuten, wobei die Gesamtsumme von n + m so gewählt wird um M abzusättigen,

behandelt wurde, unter Einhaltung eines Molverhältnisses von C zu B von 2 bis 1000 und einem Mengenverhältnis von C zu A in mmol/g von höchstens 5,

und das erhaltene Polymerisationsprodukt, gegebenenfalls nach Abtrennung von flüssigem Reaktionsmedium und/oder auswaschbarer Bestandteile bei erhöhter Temperatur unter Einwirkung von Knet- und/oder Scherkräften homogenisiert und gegebenenfalls ausgeformt wird.

2. Verfahren nach Anspruch 1, dadurch gekennzeichnet, dass als Monoolefin ein $C_2$–$C_6$α-Monoolefin eingesetzt wird.

3. Verfahren nach Anspruch 1 oder 2, dadurch gekennzeichnet, dass ein Katalysator mit einem Molverhältnis von Aluminiumtrialkyl zu Übergangsmetallverbindung von 5 bis 200, insbesondere 10 bis 100 verwendet wird.

4. Verfahren nach einem oder mehreren der Ansprüche 1 bis 3, dadurch gekennzeichnet, dass ein Katalysator mit einem Mengenverhältnis von Aluminiumtrialkyl zu Stärke in mmol/g von höchstens 3 und insbesondere weniger als 2 verwendet wird.

5. Verfahren nach einem oder mehreren der Ansprüche 1 bis 4, dadurch gekennzeichnet, dass ein Katalysator verwendet wird, zu dessen Herstellung als Übergangsmetallverbindung der Formel I eine Verbindung der allgemeinen Formel

$$(Cyclopentadienyl)_2M(CH_3)_2$$

verwendet wurde, in der M Ti oder Zr bedeuten.

6. Verfahren nach einem oder mehreren der Ansprüche 1 bis 4, dadurch gekennzeichnet, dass ein Katalysator verwendet wird, zu dessen Herstellung das Acetonylacetonat von Chrom oder Vanadium eingesetzt wurde.

7. Verfahren nach einem oder mehreren der Ansprüche 1 bis 5, dadurch gekennzeichnet, dass als Olefin Äthylen und/oder Propen verwendet wird.

8. Verfahren nach einem oder mehreren der Ansprüche 1 bis 6, dadurch gekennzeichnet, dass als Stärke eine körnige Getreide-, insbesondere Mais-, und/oder Wurzel- bzw. Knollenstärke, insbesondere Kartoffelstärke, und/oder eine modifizierte, insbesondere abgebaute Stärke verwendet wird.

9. Verfahren nach einem oder mehreren der Ansprüche 1 bis 8, dadurch gekennzeichnet, dass als Stärke ein Gemisch aus körniger Stärke und 5 bis 80 Gew.% Zellulosefasern verwendet wird.

10. Verfahren nach einem oder mehreren der Ansprüche 1 bis 9, dadurch gekennzeichnet, dass die Stärke aus den Stärke/Polyolefin-Polymermassen mechanisch und/oder durch Herauslösen in an sich bekannter Weise zumindest teilweise abgetrennt wird.

**Claims**

1. Process of producing polymeric compositions from polyolefins and starch and/or lignine as well as optionally cellulosic fibers, through polymerization of at least one olefin, preferably a lower molecular aliphatic mono-olefin in an inert, liquid and/or gaseous reaction medium, at a temperature of from −50 to 145 °C in the presence of a Ziegler-Natta-catalyst system prepared by treating

A) largely dried starch and/or lignine or a mixture of such a starch and/or such a lignine with up to 99% by weight of cellulosic fiber proportion with

B) a titanium, zirconium, chromium or vanadium compound, and

C) an aluminum trialkyl, characterized in that polymerization is carried through in the presence of a halogen-free catalyst system, which has been prepared in that the component A) was treated

1) first with the aluminum trialkyl C) and
2) thereafter with a transition metal compound B) of the general formula

$$(cyclopentadienyl)_nMR_m \quad (I),$$

in which

M denotes Ti, Zr, Cr or V and

R denotes a lower hydrocarbon radical or acetyl acetonate and

n and m are alike or different and respectively denote an integer of from 0 to 4, with the total sum of n+m being selected such as to saturate M, under adherence to a molar ratio of C to B of from 2 to 1000 and an amount ratio of C to A in mmol/g of at most 5,

and the resultant polymerization product is, optionally after separation of liquid reaction medium and/or components which can be washed out, homogenized and optionally shaped at elevated temperature under the action of kneading and/or shearing forces.

2. The process of claim 1, characterized in that a $C_2$-$C_6\alpha$-monoolefin is used as monoolefin.

3. The process of claim 1 or 2, characterized in that a catalyst is used having a molar ratio of aluminum trialkyl to transition metal compound of from 5 to 200, particularly from 10 to 100.

4. The process of one or more of claims 1 to 3, characterized in that a catalyst is used having an amount ratio of aluminum trialkyl to starch expressed in mmol/g of at most 3 and in particular of less than 2.

5. The process of one or more of claims 1 to 4, characterized in that a catalyst is used, for the production of which a compound of the general formula

$$(cyclopentadienyl)_2M(CH_3)_2,$$

in which M denotes Ti or Zr, has been used as transition metal compound of formula I.

6. The process of one or more of claims 1 to 4, characterized in that a catalyst is used, for the production of which the acetonylacetonate of chromium or vanadium has been utilized.

7. The process of one or more of claims 1 to 5, characterized in that ethylene and/or propene is used as olefin.

8. The process of one or more of claims 1 to 6, characterized in that a granular grain starch, particularly corn and/or root or, resp., tuber starch, particularly potato starch, and/or a modified, particularly degraded starch, is used as starch.

9. The process of one or more of claims 1 to 8, characterized in that a mixture of granular starch and from 5 to 80% by weight of cellulosic fibers is used as starch.

10. The process of one or more of claims 1 to 9, characterized in that the starch is at least partially separated from the starch/polyolefin-polymer composition mechanically and/or by dissolving it out in per se known manner.

**Revendications**

1. Procédé de production de matières polymériques formées de polyoléfines et d'amidon et/ou de lignine ainsi que, le cas échéant, de fibres cellulosiques, par polymérisation d'au moins une oléfine, de préférence une mono-oléfine aliphatique de bas poids moléculaire dans un milieu réactionnel inerte liquide et/ou gazeux, à une température de −50 à 145 °C en présence d'un système de catalyseur Ziegler-Natta préparé par traitement

A) d'amidon largement séché et/ou de lignine ou d'un mélange d'un tel amidon et/ou d'une telle lignine avec jusqu'à 99% en poids de fibres cellulosiques avec

B) un composé de titane, de zirconium, de chrome ou de vanadium, et

C) un aluminiumtrialkyle, caractérisé en ce que la polymérisation est conduite en présence d'un système catalyseur dépourvu d'halogène, qui a été préparé de manière telle que le composant A) a été traité

1) d'abord avec l'aluminiumtrialkyle C) puis
2) avec un composé B) de métal de transition de formule générale

$$(\text{Cyclopentadiényle})_n MR_m \qquad (I),$$

dans laquelle

M représente Ti, Zr, Cr ou V et

R représente un reste d'hydrocarbure inférieur ou un groupe acétylacétonate, et

n et m sont égaux ou différents et représentent chacun un nombre entier de 0 à 4, la somme $n+m$ étant choisie de manière à saturer M,

en maintenant un rapport molaire de C à B de 2 à 1000 et un rapport quantitatif de C à A en mmoles/g au maximum égal à 5,

et le produit de polymérisation obtenu, éventuellement après séparation du milieu réactionnel liquide et/ou des composants pouvant être extraits par lavage, est homogénéisé à température élevée sous l'action de forces de malaxage et/ou de cisaillement et est éventuellement mis en forme.

2. Procédé selon la revendication 1, caractérisé en ce qu'on utilise comme mono-oléfine une $\alpha$-mono-oléfine en $C_2$ à $C_6$.

3. Procédé selon la revendication 1 ou 2, caractérisé en ce qu'on utilise un catalyseur avec un rapport molaire de l'aluminiumtrialkyle au composé de métal de transition de 5 à 200 et notamment de 10 à 100.

4. Procédé selon une ou plusieurs des revendications 1 à 3, caractérisé en ce qu'on utilise un catalyseur ayant un rapport quantitatif de l'aluminium-trialkyle à l'amidon en mmoles/g ayant une valeur maximale de 3 et notamment une valeur inférieure à 2.

5. Procédé selon une ou plusieurs des revendications 1 à 4, caractérisé en ce qu'on utilise un catalyseur pour la préparation duquel on a utilisé comme composé de métal de transition de formule I un composé de formule générale

$$(\text{cyclopentadiényle})_2 M(CH_3)_2$$

dans laquelle M désigne Ti ou Zr.

6. Procédé selon une ou plusieurs des revendications 1 à 4, caractérisé en ce qu'on utilise un catalyseur pour la préparation duquel on a utilisé l'acétylacétonate de chrome ou de vanadium.

7. Procédé selon une ou plusieurs des revendications 1 à 5, caractérisé en ce qu'on utilise comme oléfine l'éthylène et/ou le propène.

8. Procédé selon une ou plusieurs des revendications 1 à 6, caractérisé en ce qu'on utilise comme amidon un amidon de céréales, notamment de maïs et/ou une fécule de racines et/ou de tubercules, notamment de la fécule de pomme de terre, et/ou un amidon modifié, notamment dégradé.

9. Procédé selon une ou plusieurs des revendications 1 à 8, caractérisé en ce qu'on utilise comme amidon un mélange d'un amidon en grains et de 5 à 80% en poids de fibres cellulosiques.

10. Procédé selon une ou plusieurs des revendications 1 à 9, caractérisé en ce que l'amidon est séparé au moins partiellement d'une manière connue des matières polymériques amidon/polyoléfine mécaniquement et/ou par extraction par un solvant.